(19) Europäisches Patentamt
European Patent Office
Office européen des brevets

(11) Publication number: **0 006 289**
**A1**

(12) # EUROPEAN PATENT APPLICATION

(21) Application number: 79300805.3

(22) Date of filing: 10.05.79

(51) Int. Cl.³: B 29 C 1/00, B 29 F 1/022

(30) Priority: 30.05.78 US 910991

(43) Date of publication of application: 09.01.80 Bulletin 80/1

(84) Designated Contracting States: DE FR GB IT

(71) Applicant: Allied Chemical Corporation, P.O. Box 1057 R, Morristown New Jersey 07960 (US)

(72) Inventor: Progelhof, Richard Carl, 140 Sutton Drive, Berkeley Heights, New Jersey 07922 (US)

(74) Representative: Baillie, Iain Cameron et al, c/o Ladas, Parry, von Gehr. Goldsmith & Deschamps Blumenstrasse 48, D-8000 München 2 (DE)

(54) **Mould for controlling sink-marks on moulded plastic articles and method of producing the articles.**

(57) Sink-marks (22) on molded plastic articles (14), which result from ribs or bosses (12) are controlled by the use of a mold containing an insulating insert (16) which allows the molded articles to solidify in such a way that a least one surface of the rib or boss is "free" or molten during solidification.

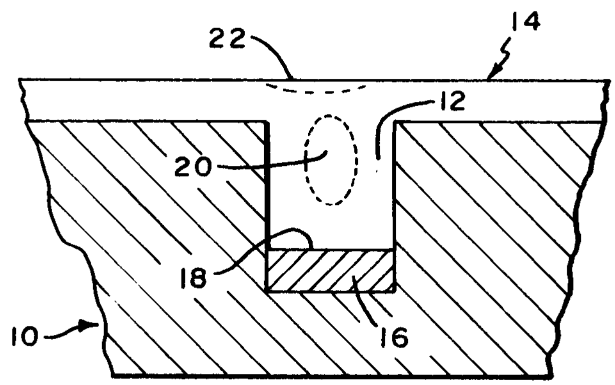


EP 0 006 289 A1

TITLE MODIFIED
see front page

# CONTROL OF SINK-MARKS ON MOLDED PLASTIC ARTICLES

This invention relates to the use of a mold containing an insulating insert for controlling sink-marks in molded plastic articles.

Plastics are often used in high performance loadbearing applications. To accommodate such applications, molded plastics are designed so that internal structural components, such as ribs or bosses, are combined with and become part of the external molded article. These ribs and bosses are protuberances on the plastic article designed to add strength, to facilitate alignment during assembly, to provide for fastenings, etc.

One serious problem associated with the use of ribs and bosses is that they cause sink-marks at the smooth surface above the intersection of the ribs or bosses. These sink-marks, or surface depressions, generally occur above sections where there is local thickening (ribs and bosses) and in which the internal mass contains sufficient heat to hold the surface in a plastic state and draw it inwards, or contract, as cooling proceeds. Various attempts have been made heretofore to either eliminate or minimize the effect of these sink-marks. For example, where the flat surface intersecting the rib or boss does not have to have a smooth appearance, the surface is sometimes textured in order to camouflage the sink-marks. Another method which is generally used is to design the plastic article so that the thickness of the rib or boss is substantially less than the thickness of the intersected section of the plastic article.

Although these prior art methods have met with success in limited applications, there is still a need to eliminate or to effectively eliminate sink-marks wherein a smooth surface is required and wherein it is impractical for the rib or boss to be of lesser thickness in diameter than the thickness of section from which it protrudes.

## SUMMARY OF THE INVENTION

In accordance with the present invention there is provided a unique mold and a method for controlling the sink-marks normally appearing on flat surfaces of molded plastic articles wherein the flat surfaces are intersected on their underside by ribs or bosses.

The present method comprises the use of an insulating insert in a conventional mold. When the plastic is a thermoplastic, the insert acts to maintain a higher temperature at the surface of the rib or boss to which it is contiguous to, thereby assuring that that surface develops rigidity at a slower rate than the other surfaces of the rib or boss. When the plastic is a thermoset, the insulating insert prevents the surface to which it is contiguous to cure at a slower rate than the other surfaces of the rib or boss.

## BRIEF DESCRIPTION OF THE DRAWINGS

For a better understanding of the present invention, reference is made to the accompanying drawings, wherein all the drawings illustrate a cross-sectional view of a section of a mold that contains the means for molding a plastic article containing ribs and/or bosses and an insert which provides a way for effectively controlling or eliminating sink-marks. For example:

Fig. 1 illustrates a mold containing a circular insert insulating means to allow a "free" molten surface after molding and during solidification to room temperature;

Fig. 2 is an embodiment that allows such a "free" surface and incorporates the use of a T-shaped insulating means:

Fig. 3 illustrates another embodiment wherein a metal pin surrounded by an insulating means is used to control sink-marks;

Fig. 4 and Fig. 5 also illustrate alternative embodiments for controlling or eliminating sink-marks directly related to bosses or ribs.

## DETAILED DESCRIPTION

Molded articles of both thermoplastic resins and thermosetting resins are suitable for the practice of the present invention. Suitable thermoplastic materials which may be employed comprise a wide range of polymeric compositions. Non-limiting examples include olefinic polymers such as polyethylene, polypropylene and copolymers and terpolymers thereof, e.g., copolymers of ethylene and ethyl acrylate; vinyl polymers comprising one or more of the following monomers: vinyl aryls such as styrene, o-phenylstyrene, m-phenylstyrene, p-phenylstyrene, o-methylstyrene, m-methylstyrene, p-methylstyrene, o-methoxystyrene, m-methoxystyrene, p-methoxystyrene, o-nitrostyrene, m-nitrostyrene, p-nitrostyrene, and the like; vinyl and vinylidene halides, such as vinyl chloride, vinylidene chloride, vinylidene bromide, and the like; vinyl esters such as vinyl acetate, vinyl propionate, vinyl butyrate, vinyl chloroacetate, vinyl benzoate, and the like; polycarbonates, that is, thermoplastics containing the following repeating units:

$$-\overset{O}{\overset{\|}{C}}-O-Ar-O$$

wherein Ar is the residue of an aromatic dihydric phenol; cellulostics, such as cellulose acetate, cellulose triacetate, cellulose acetate butyrate, cellulose propionate, ethyl cellulose, and the like; polyamides, polyesters such as polyethylene terephthalate, polyethylene isophthalate, poly(ethylene-2,7-naphthamate), polybutylene terephthalate, polypropylene terephthalate, copolymers thereof and the like; chlorinated polyethylene, chlorinated polyvinyl chloride, polyfluoroethylene, polytrifluorochloroethylene, polyhexafluoropropylene, copolymers thereof, such as copolymers of vinylidene fluoride and trifluorochloroethylene, and the like, as well as mixtures of any of the above.

Also suitable for use herein are polyurethane polymers, polysulfone polymers, polyacetal polymers, halogenated olefins, and phenoxy polymers. Included in the term "polymer" are blends of two or more polymeric materials. Also contemplated within the term "polymer" are the metallic salts of those polymers or blends thereof which contain free carboxylic acid groups. Non-limiting examples of such polymers include ethylene-acrylic acid copolymers and ethylene-methacrylic acid copolymers. Illustrative of the metals which may be used to provide the salts of such carboxylic acid polymers are the mono-, di-, and tri- valent metals such as sodium, calcium and aluminum.

Preferred thermoplastic polymers are polyamides, polyolefins, and polyesters; more preferred are polyamides, and specific polyolefins such as polypropylene, polyethylene, and the polyesters, polybutylene terephthalate, and polyethylene terephthalate; most preferred are polyamides. Non-limiting examples of such polyamides are: a) those prepared by the polymerization of lactams, preferably epsilon-caprolactam; b) those prepared by the condensation of a diamine with a dibasic acid, preferably the condensation of hexamethylene diamine with sebacic acid; c) those prepared by self-condensation of amino acids, preferably self-condensation of 11-aminoundecanoic acid; and d) those based on polymerized vegetable oil acids, or random, block, or graft interpolymers consisting of two or more of these polyamides. These include polycaprolactams containing a) carboxyl groups attached to both ends of the polymer chain; b) a carboxyl group attached to one end and an acetamide group attached to the

other end of the chain; c) amino groups attached to both ends of the polymer chain; and d) a carboxyl group attached to one end and an amino group attached to the other end of the polymer chain.

Thermosetting resins suitable for use herein are preferably unsaturated polyester resins and epoxy resins although other thermosets can be used.

When these plastic resins are molded into articles containing protuberances such as bosses or ribs, the formation of sink-marks are likely to occur owing to the internal contraction forces generated as the thermoplastic cools from the molding temperature to room temperature or as the thermoset cures upon heating. This will occur whenever a molten polymer solidifies while surrounded by material that has already solidified. Since the contraction forces require a bounded volume with a more molten interior, the present invention reduces these internal forces by using insulating inserts in the mold which, in the case of thermoplastics, would maintain a higher temperature at the surface of the rib or boss to which it is contiguous to, thereby assuring that such surface develops rigidity at a slower rate than the other surfaces of the rib or boss. When the plastic is a thermoset, the insulating insert prevents the surface, to which it is contiguous, to cure at a slower rate than the other surfaces of the rib or boss. In other words the insulating insert acts to retard heat transfer either to or from contiguous surfaces.

In order for the mold inserts of the present invention to realize the highest degree of effectiveness, it is preferred to use insulating materials having low diffusivity values. Generally insulating materials having a diffusivity value from about 0.001 to 0.01, preferably 0.001 to 0.005 are suitable for use herein. In selecting a particular insulating material it is important to take into consideration the diffusivity value of the material which the mold is comprised of so that the diffusivity value of the insulating material is substantially lower

than that of the mold material. For example, fluoropolymers have a diffusivity value of about 0.0035 $ft^2/hr$, as opposed to 15.49 $ft^2/hr$ for stainless steel, 3.33 $ft^2/hr$ for aluminum and 1.6 $ft^2/hr$ for zinc. Non-limiting examples of insulating materials suitable for use in the present invention and suitable for use at high temperatures are fluoropolymers such as polytetrafluoroethylene, polychlorotrifluoroethylene, copolymers of ethylene and chlorotrifluoroethylene, and copolymers of vinylidene fluoride and hexafluoroisobutylene; and ceramic materials. Also suitable are those materials useful at lower temperatures such as polyurethanes, polyamides and polysulfones. Preferred are the fluoropolymers. Release agents may also be used with the insert depending on the adhesive characteristics of the molding resin to the insulating insert, although some of the aforementioned materials such as the fluoropolymers are self releasing in themselves.

Diffusivity values for the metal materials referenced herein were obtained from the text, Principles of Heat Transfer by Frank Creith, 3rd edition, published by Intext Educational Publishers. The diffusivity values for the polymeric insulating materials can be calculated from the Resins and Molding Compounds Property Charts of the Modern Plastics Encyclopedia, 1977-1978 edition, published by McGraw-Hill.

The mold and its composition can be any of those used in the art for such resins and the method of molding can be any of those conventionally practiced such as injection molding, hot stamping, compression molding, and transfer molding, preferred are injection molding and hot stamping.

By use of the present invention sink-marks caused by ribs and bosses which normally appear on molded plastic articles are effectively eliminated. By effectively eliminated we mean that the sink-marks cannot be seen before painting and cannot be measured by standard physical testing apparatus which generally cannot measure such indentations with an acceptable degree of confidence

below about one thousandth of an inch. Although the molded articles prepared in accordance to the present invention may contain crowns higher than one thousandth of an inch where sink-marks would normally appear, such crowns are acceptable and would not detract from either the physical or cosmetic value of the article.

Referring now to the drawings, Figs. 1 to 5 illustrate various embodiments of the present invention. Figure 1 represents a cross-sectional view of a section of a mold 10 wherein a boss section 12 is molded along with and as part thereof of molded article 14. The mold contains an insulating means 16 which maintains a surface 18 having a lower degree of heat transfer than the remaining surfaces of the article thereby preventing a molten center section 20 (in the case of thermoplastics) surrounded by solidified polymer and in turn reducing the depth of sink-mark 22. The insulating means 16 of Fig. 1 is a polytetrafluoroethylene disc which is attached to the mold and can be used for repeated moldings before replacement is required.

Figure 2 represents another embodiment of the present invention wherein the insulating means 24 is a T-shaped structure in the case of ribs and peg-shaped in the case of bosses such that its elongated section 26 is about 1/8 to 3/4 times the diameter of the boss or rib. The T- or peg-shaped insulating means of Fig. 2 eliminates the molten core of the boss or rib after molding and thereby allows even a greater degree of control of the sink-marks than the embodiment illustrated in Fig. 1.

Figure 3 shows an embodiment of the present invention having a head portion 31 and a shaft portion 33 containing a pin 30 which is an integral part of mold 10 and surrounded by insulating means 32. This design eliminates the center core of the boss or rib while also allowing a surface of low heat transfer contiguous to the insulating means as opposed to the other surfaces of the article.

Figures 4 and 5 show other embodiments of the

present invention. Fig. 4 contains a solid metal pin 34 which is an integral part of mold 10 and surrounded by insulating means 36. Fig. 5 also contains a pin 38, but instead of the pin being surrounded by an insulating means, the boss or rib 28 is surrounded by insulating means 40. Both these designs virtually eliminate any adverse affect of the boss as evidenced by the disappearance of sink-marks.

In order to further describe the present invention, the following non-limiting examples are given.

For experimental purposes, a series of 3 1/2 inch diameter by 1/8 inch thick discs were stamped in a mold wherein the discs contained a 5/8 inch diameter by 3/4 inch long boss. All of the discs were prepared by melt blending at about 280°C in an extruder 50 wt.% polycaprolactam, 30 wt.% mica having an aspect ratio of 20:1, 15 wt.% aluminum silicate, and 5 wt.% short glass fiber (1/8 inch strands). The melt was extruded in a mold maintained at 150°C and stamped at a pressure of 1250 psia whereupon the stamped article was allowed to cool and solidify to room temperature.

COMPARATIVE EXAMPLE

A disc was prepared according to the above procedure in a solid metal mold containing no insulating inserts. The disc measured 3 1/2 inches in diameter, 1/8 inch in thickness and contained a 5/8 inch diameter, 3/4 inch long boss protruding from the center of one of its sides. After the disc was cooled to room temperature, an indentation (sink-mark) was observed at its center on the surface opposite the boss.

EXAMPLE 1

A polycaprolactam composite disc was prepared according to the above procedure except that the mold contained a 5/8 inch diameter by 1/4 inch teflon insert such that a surface of the disc was contiguous to the bottom of the boss. After the disc had solidified to room temperature, the surface of the disc opposite the boss was examined and found to have sink-marks to a lesser degree than

the disc prepared according to the above Comparative Example. The example illustrates that if a "free" molten surface of the boss is maintained during the solidification process, the sink-marks resulting from a boss can be minimized.

EXAMPLE 2

A polycaprolactam composite disc was prepared according to the above examples except that the mold insert was a polytetrafluoroethylene peg-shaped member as shown in Fig. 2. The horizontal disc shaped section of the peg-shaped member was 1/4 inch thick, the vertical section was 1/8 inch in diameter and extended to the intersection of the boss and the disc as shown on (a) in Fig. 2. For purposes of this invention the diameter of the vertical portion of the peg-shaped member can be from about 1/8 to 3/4 of the diameter of the boss. Although it is preferred that the vertical section of the peg-shaped member extend to the point where the boss intersects the disc, it will be noted that suitable results will also be obtained when vertical portion extends as much as about 1/4 into the disc portion or 1/2 the thickness of the disc away from the aforementioned intersection point.

After solidification, the surface of the disc, opposite the boss, was found to have a lesser degree of indentation than the disc prepared according to the Comparative Example and Example 1 above. This example illustrates that not only is it desirable to maintain a surface of the boss in the "free" molten state during solidification, but that it is also desirable to eliminate the molten center core (Fig. 1, 20) of the boss and provide a more extended free surface with respect to eliminating sink-marks caused by the presence of bosses and ribs.

EXAMPLE 3

Polycaprolactam composite discs were prepared according to the procedure set forth in the previous examples except that one mold insert was that as shown in Fig. 3 and the other was that as shown in Fig. 4. In one sample, member 31 of Fig. 3 was 1/16" in diameter and 33

was 1/8" thick, in another sample 31 was 1/8" in diameter and 33 was 1/4" thick. Also in another sample member 34 of Fig. 4 was 1/16" in diameter and 35 of member 36 was 1/8" thick and in another sample member 34 was 1/8" in diameter and 35 was 1/4" thick. Members 30 and 34 are of the sample material as mold 10 and are a permanent part of and extend from said mold.

After solidification, no sink-marks in the form of indentations were mechanically detected on the flat surface of the disc opposite the boss.

COMPARATIVE EXAMPLE

Several polycaprolactam composite discs were prepared according to the previous comparative example except that instead of a boss the disc was molded with a 1/4 inch wide by 3/16 inch deep rib. After stamping in the mold and solidification to room temperature the flat surface of the disc opposite the rib was found to contain a substantial indentation tracking the rib. The depth of these indentations was found to be from about 0.0028 to 0.0062 inches.

EXAMPLE 4

A polycaprolactam composite disc was prepared according to the previous comparative example except that the mold contained a T-shaped insulating insert situated so that the vertical section was positioned through the center of the rib and to a point where the rib intersects the disc. The dimension requirements of the insert are identical to those of the T-shaped insert of Example 2 herein.

After solidification, the indentations on the flat surface of the disc from the rib were found to be less than 0.001 inches.

EXAMPLE 5

An epoxy resin composite disc is prepared having the same dimensions as that in Example 2 above and is represented by Fig. 5 herein. Member 38 of Fig. 5 is 1/8" in diameter and is of the same material and an integral part of the mold and extends to the intersection of the

boss and the disc. Member 40 is comprised of polytetrafluoroethylene and is 1/8" thick on all sides.

After curing, the molded epoxy resin article is found to have no measurable sink-marks.

What we claim is:

1. A mold for shaping plastic articles from molten plastic resin wherein said articles are provided with ribs and/or bosses, characterised in that there is provided a means to effectively eliminate sink-marks, on the molded plastic articles, which are caused by said ribs and/or bosses upon solidification, which means is an insulating insert and an integral part of the mold and causes a lower rate of heat transfer at the surface of the plastic article to which it is contiguous to, upon solidification of the molded article.

2. A mold according to claim 1 wherein the diffusivity value of the mold is about 20 to 3000 times the diffusivity value of the insulating material of the insert.

3. A mold according to either of claims 1 and 2 wherein the insulating insert comprises a fluoropolymer, a ceramic, a polyamide, a polyurethane and a polysulfone.

4. A mold according to claim 3 wherein the insulating material insert is a fluoropolymer.

5. A mold according to any one of claims 1 to 4 which is used for molding thermoplastic resins.

6. A mold according to claim 5 wherein the thermoplastic resin is a polyamide.

7. A method of producing a substantially sink-mark free plastic molded article containing ribs and/or bosses characterised by feeding a molten plastic resin into a mold containing an insulating insert as an integral part thereof wherein said insert is aligned such that it causes at least one surface of the ribs and/or bosses to undergo heat transfer at a lower rate than any other surface of the article; cooling the molded article until it is solid; and removing the article from the mold.

8. A method according to claim 7 wherein the diffusivity value of the mold is 20 to 3000 times the diffusivity value of the insulating material of the insert.

9. A method according to either of claims 7 and 8 wherein the insulating insert comprises a fluoropolymer, a ceramic, a polyamide, a polyurethane or a polysulfone.

10. A method according to any one of claims 7 to 9 wherein the molten plastic resin is a polyamide.

FIG. 1

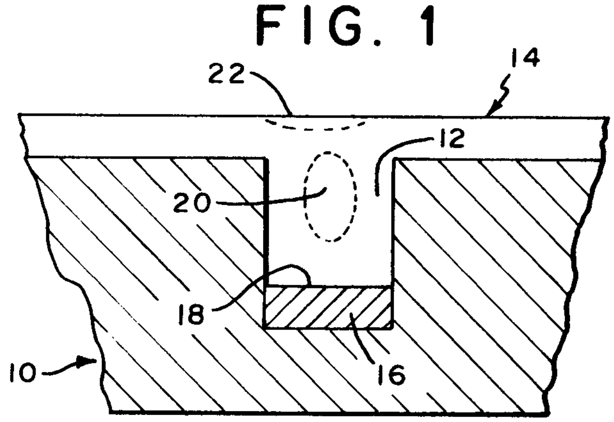


FIG. 2

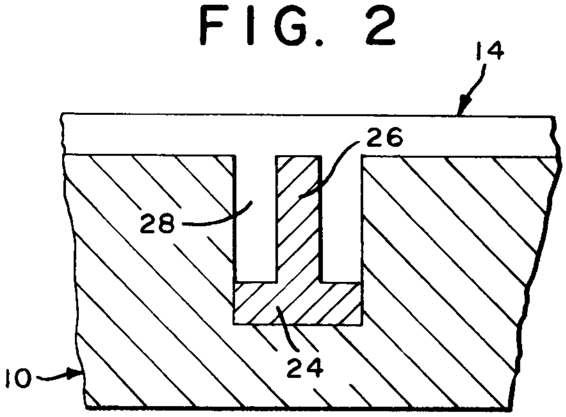


FIG. 3

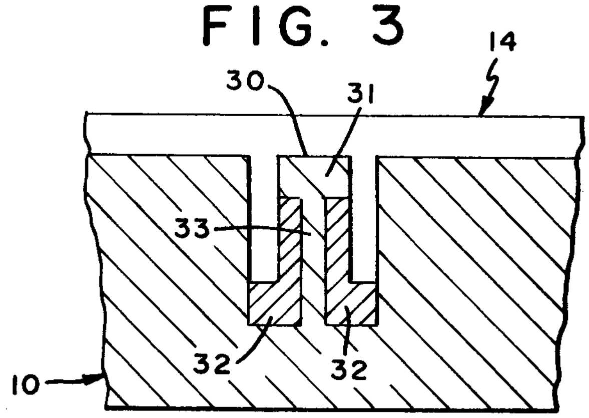


FIG. 4

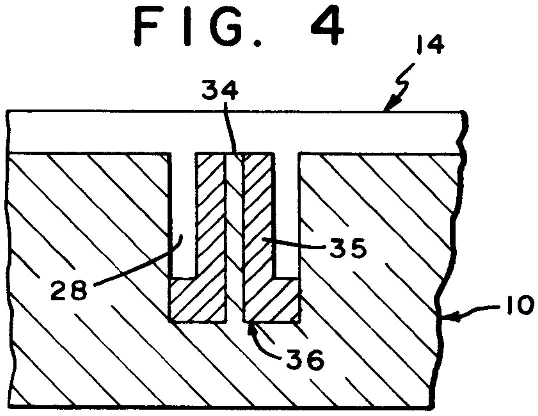


FIG. 5

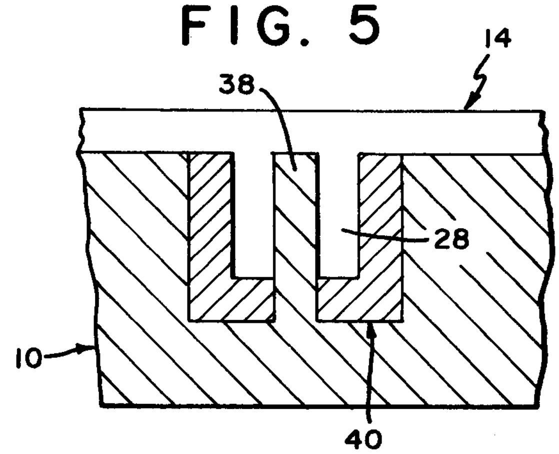

European Patent Office

# EUROPEAN SEARCH REPORT

0006289

Application number
EP 79 30 0805

## DOCUMENTS CONSIDERED TO BE RELEVANT

| Category | Citation of document with indication, where appropriate, of relevant passages | Relevant to claim |
|---|---|---|
| X | GB - A - 1 448 511 (MONTEDISON)<br>* page 3, lines 23-43; figures 11-15 *<br>—— | 1,2,3, 4,5,7, 8,9 |

**CLASSIFICATION OF THE APPLICATION (Int. Cl.²)**

B 29 C 1/00
B 29 F 1/022

**TECHNICAL FIELDS SEARCHED (Int.Cl.²)**

B 29 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-08-1979 | SCHMIDL |